(19)

Europäisches
Patentamt
European
Patent Office
Office européen
des brevets

(11) **EP 4 560 736 A1**

(12) **EUROPEAN PATENT APPLICATION**
published in accordance with Art. 153(4) EPC

(43) Date of publication:
**28.05.2025   Bulletin 2025/22**

(21) Application number: 23843385.8

(22) Date of filing: **19.07.2023**

(51) International Patent Classification (IPC):
*H01M 4/62* (2006.01)     *H01M 4/133* (2010.01)
*H01M 4/1393* (2010.01)    *H01M 4/583* (2010.01)
*H01M 10/0525* (2010.01)   *H01M 4/02* (2006.01)

(52) Cooperative Patent Classification (CPC):
**H01M 4/02; H01M 4/133; H01M 4/1393;
H01M 4/583; H01M 4/62; H01M 10/0525;
Y02E 60/10**

(86) International application number:
**PCT/KR2023/010433**

(87) International publication number:
**WO 2024/019539 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  20.07.2022  KR 20220089902

(71) Applicant: **CJ CheilJedang Corporation
Seoul 04560 (KR)**

(72) Inventors:
• **LEE, Changsuk
  Seoul 04560 (KR)**

• **YOON, Ki Chull
  Seoul 04560 (KR)**
• **LEE, Eun-Hye
  Seoul 04560 (KR)**
• **JIN, Hyoung-Joon
  Seoul 08096 (KR)**
• **YOON, Juhee
  Incheon 22207 (KR)**
• **HAN, Geonhee
  Incheon 21596 (KR)**

(74) Representative: **Meissner Bolte Partnerschaft
mbB
Patentanwälte Rechtsanwälte
Postfach 86 06 24
81633 München (DE)**

(54) **COMPOSITION FOR ELECTRODE ACTIVE MATERIAL, AND ELECTRODE AND SECONDARY
BATTERY COMPRISING SAME**

(57)    The present invention relates to a composition
for electrode active material, and an electrode and sec-
ondary battery comprising same, the composition com-
prising an electrode active material, a binder, and a
conductive material, wherein the binder contains poly-
hydroxyalkanoate (PHA). By containing polyhydroxyalk-
anoate (PHA) as a binder, the composition for electrode
active material: can further improve adhesion between
active materials and between an active material and an
electrode current collector; has excellent oxidation resis-
tance and is electrochemically stable; and may achieve
the long lifespan, high capacity, and high power output of
secondary batteries even if the binder is used in a small
amount, thereby enabling the use thereof not only in a
battery cell that is used as a power source for small
devices, but also in the unit cell of medium and large-
sized battery modules comprising multiple cells.

[Fig. 3]

EP 4 560 736 A1

## Description

### Technical Field

The present disclosure relates to an electrode active material composition and to an electrode and a secondary battery comprising the same.

### Background Art

The demand for secondary batteries as an energy source is rapidly increasing in tandem with technological development and an increase in the demand for various transportation means, such as electric vehicles, electric motorcycles, electric kickboards, electric scooters, electric wheelchairs, and electric bicycles, in addition to mobile devices. Lithium secondary batteries, among such secondary batteries, have been commercialized to be widely used since they exhibit high energy density and operating potential, long cycle lifespan, and low self-discharge rate.

The electrode of a lithium secondary battery is manufactured by mixing an electrode active material, a binder, and a conductive material to prepare an active material composition, applying the same to the surface of an electrode current collector, drying it, and forming a composite layer.

In the above electrode, a binder is used to secure adhesive strength or bonding strength between active materials or between an active material and an electrode current collector while an excessive amount of binder is required to enhance the adhesive strength between the electrode current collector and the active material.

However, an excessive amount of binder may cause problems such as a decrease in the capacity and conductivity of the electrode. On the other hand, a small amount of binder may reduce adhesive strength, and insufficient adhesive strength may cause electrode delamination during processes such as electrode drying and pressing, which may increase the electrode defect rate. In addition, an electrode with low adhesive strength may be delaminated by external impact. Such electrode delamination may increase the contact resistance between the electrode material and the current collector, which may cause a decrease in electrode output performance.

Meanwhile, examples of currently commercialized binders include poly(vinylidene fluoride) (PVDF), styrene-butadiene rubber (SBR), and carboxyl methyl cellulose (CMC). However, there is a need to develop a binder that can replace the above binders, can be readily purchased, is environmentally friendly, and can achieve equivalent or better effects in terms of lifespan characteristics, output characteristics, and capacity characteristics of secondary batteries.

[Prior Art Document]

[Patent Document]

(Patent Document 1) Korean Patent No. 10-2071585

### Disclosure of Invention

### Technical Problem

An object of the present disclosure is to provide an electrode active material composition that comprises a polyhydroxyalkanoate (PHA) as a binder, is environmentally friendly, provides excellent adhesive strength between active materials and between an active material and an electrode current collector, enhances oxidation resistance and electrochemical stability, achieves both high capacity and high output, as well as long lifespan characteristics, of secondary batteries even with a small amount of binder, and has flame retardancy that do not expand combustion and do not generate hazardous substances when the polyhydroxyalkanoate (PHA) is incinerated.

Another object of the present disclosure is to provide an electrode and a secondary battery, each of which comprises the electrode active material composition having the characteristics described above.

### Solution to Problem

According to an embodiment of the present disclosure, there is provided an electrode active material composition, which comprises an electrode active material, a binder, and a conductive material, wherein the binder comprises a polyhydroxyalkanoate (PHA).

According to another embodiment, the polyhydroxyalkanoate (PHA) may have a glass transition temperature (Tg) of -45°C to 80°C and a melt index (MI) of 0.1 g/10 minutes to 500 g/10 minutes when measured at a temperature of 165°C under a load of 5.0 kg in accordance with ASTM D1238.

According to another embodiment, the polyhydroxyalkanoate (PHA) may comprise at least one monomer selected from the group consisting of 4-hydroxybutyrate (4-HB), 3-hydroxybutyrate (3-HB), 3-hydroxypropionate (3-HP), 3-hydroxyvalerate (3-HV), 3-hydroxyhexanoate (3-HH), 4-hydroxyvalerate (4-HV), 5-hydroxyvalerate (5-HV), and 6-hydroxyhexanoate (6-HH).

According to another embodiment, the polyhydroxyalkanoate (PHA) may comprise a PHA homopolymer composed of a 4-hydroxybutyrate (4-HB) monomer.

According to another embodiment, the polyhydroxyalkanoate (PHA) may comprise a PHA copolymer comprising a 4-hydroxybutyrate (4-HB) monomer, wherein the 4-hydroxybutyrate (4-HB) monomer may be employed in an amount of 1% by mole to 99% by mole based on the total moles of monomers employed in the PHA copolymer.

According to another embodiment, the binder may be employed in an amount of 0.1% by weight to 20% by weight based on the total weight of the electrode active material composition.

According to another embodiment, the weight ratio of the electrode active material, the binder, and the conductive material may be (4.0 to 9.8):(0.1 to 3.0):(0.1 to 3.0).

According to another embodiment, the electrode active material may be a negative electrode active material.

According to another embodiment, the negative electrode active material may comprise at least one selected from the group consisting of a carbon-based negative electrode active material, a silicon-based negative electrode active material, lithium metal, and a lithium alloy; and the conductive material may comprise at least one selected from the group consisting of graphite, carbon black, conductive fibers, conductive tubes, metal powders, conductive whiskers, and conductive metal oxides.

According to another embodiment of the present disclosure, there is provided an electrode, which comprises an electrode active material, a binder, and a conductive material, wherein the binder comprises a polyhydroxyalkanoate (PHA).

According to another embodiment of the present disclosure, there is provided a secondary battery, which comprises a negative electrode, a positive electrode, a separator interposed between the negative electrode and the positive electrode, and an electrolyte, wherein at least one of the negative electrode and the positive electrode comprises a binder comprising a polyhydroxyalkanoate (PHA).

According to another embodiment, when the secondary battery is charged at a constant current of 0.05 C until the voltage reaches 3 V and then discharged at a constant current of 0.05 C until the voltage reaches 0.01 V, the Coulombic efficiency represented by the following Equation 1 may be 93% or more, and the specific capacity measured after repeat of the above charging and discharging twice may be 280 mAhg$^{-1}$ or more:

[Equation 1]

$$\text{Coulombic efficiency (\%)} = \text{discharge capacity/charge capacity} \times 100.$$

**Advantageous Effects of the Invention**

The electrode active material composition according to an embodiment of the present disclosure comprises a polyhydroxyalkanoate (PHA) as a binder. As a result, it is possible to further enhance the adhesive strength between active materials and between an active material and an electrode current collector, have excellent oxidation resistance and electrochemical stability, and achieve long lifespan characteristics, high capacity, and high output of secondary batteries even with a small amount of binder.

In addition, the secondary battery according to an embodiment of the present disclosure comprises the electrode active material composition having the characteristics described above. As a result, the electrochemical performances, such as Coulombic efficiency and capacity characteristics, are further enhanced, whereby not only can it be used in battery cells used as power sources for small devices, but it can also be advantageously utilized in unit cells of medium- to large-sized battery modules comprising a plurality of battery cells.

In particular, the present disclosure has a technical significance in that a polyhydroxyalkanoate (PHA) is employed as a binder, which can replace conventional binders, such as poly(vinylidene fluoride) (PVDF), styrene-butadiene rubber (SBR), and carboxyl methyl cellulose (CMC), can be readily purchased, can achieve equivalent or better effects in terms of physical properties of secondary batteries, and has flame retardancy that do not expand combustion and do not generate hazardous substances when incinerated since the PHA is used.

**Brief Description of the Drawings**

Fig. 1 is pictures showing the results of measuring the solubility of PVdF used in Comparative Example 1 and PHA used in Example 1 to the electrolyte.

Fig. 2(a) shows the voltage-current curves of the electrodes of Comparative Example 1 and Example 1. Fig. 2(b) shows the voltage-current curves for the poly(vinylidene fluoride) (PVdF) binder used in Comparative Example 1 and the PHA (3-HB-co-4-HB, aPHA) binder used in Example 1.

Fig. 3 is a graph showing the results of measuring the specific capacity of the secondary batteries of Example 1, Example 2, and Comparative Example 1.

Fig. 4 is a graph showing the results of measuring the specific capacity and Coulombic efficiency according to the number of cycles of the secondary battery of Example 1.

Fig. 5 is a graph showing the results of measuring the specific capacity and Coulombic efficiency according to the number of cycles of the secondary battery of Comparative Example 1.

Fig. 6 is a graph showing the results of measuring the impedance in the first cycle of the secondary batteries of Example 1 and Comparative Example 1.

Fig. 7 is a graph showing the results of measuring the impedance in the 10th cycle of the secondary batteries of Example 1 and Comparative Example 1.

Fig. 8 is a graph showing the results of measuring the specific capacity and Coulombic efficiency according to the number of cycles of the secondary battery of Example 2.

## Best Mode for Carrying out the Invention

Hereinafter, the present disclosure will be described in detail with reference to embodiments. The embodiments are not limited to those described below. Rather, they can be modified into various forms as long as the gist of the disclosure is not altered.

Throughout the present specification, when a part is referred to as "comprising" an element, it is understood that other elements may be comprised, rather than other elements are excluded, unless specifically stated otherwise.

In the present specification, in the case where an element is mentioned to be formed "on" or "under" another element, it means not only that one element is directly formed "on" or "under" another element, but also that one element is indirectly formed on or under another element with other element(s) interposed between them.

Throughout the present specification, the terms first, second, and the like are used to describe various components. But the components should not be limited by the terms. The terms are used only for the purpose of distinguishing one component from another. In addition, all numbers expressing the physical properties, dimensions, and the like of elements used herein are to be understood as being modified by the term "about" unless otherwise indicated.

## [Electrode active material composition]

The electrode active material composition according to an embodiment of the present disclosure comprises an electrode active material, a binder, and a conductive material, wherein the binder comprises a polyhydroxyalkanoate (PHA).

In general, the binder in a secondary battery is a material that physically stabilizes the electrode of the secondary battery. It not only acts as a kind of adhesive that fixes the electrode active material and conductive material to the current collector, but also prevents the bonding between the electrode active material and the conductive material from loosening when the secondary battery is repeatedly charged and discharged. Thus, the adhesive properties of the binder, the solubility in solvents, the structural stability, and the oxidation resistance may have a significant impact on the performance of secondary batteries.

A polyhydroxyalkanoate (PHA) is employed as a binder in the present disclosure. As a result, there are significant advantages in that it is possible to further enhance the adhesive strength between active materials and between an active material and an electrode current collector, have excellent oxidation resistance and electrochemical stability, achieve long lifespan characteristics, high capacity, and high output of secondary batteries even with a small amount of binder, and have flame retardancy that do not expand combustion and do not generate hazardous substances when the polyhydroxyalkanoate (PHA) is incinerated.

Hereinafter, each component of the electrode active material composition of the present disclosure will be described in detail.

## Binder

The electrode active material composition according to an embodiment of the present disclosure comprises a binder, which is a polymer additive that can physically stabilize an electrode, wherein the binder may comprise a polyhydroxyalkanoate (hereinafter referred to as PHA).

The PHA is a material that can replace the conventional binders, can be readily purchased, and can achieve equivalent or better effects in terms of the performance of secondary batteries; thus, it can be advantageously used in secondary batteries.

Specifically, the PHA has excellent adhesive strength, is electrochemically stable, and has excellent oxidation resistance, making it highly suitable as a binder for secondary batteries. Further, when the binder is used in secondary batteries, it can maintain structural stability even after long-term cycles, whereby it can achieve high capacity and lifespan characteristics, and it can maintain high-capacity cycles for a long period of time by virtue of low resistance even upon repeated charge and discharge cycles, resulting in enhancements in the performance of the secondary batteries.

The PHA has physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibit complete biodegradability, and are excellent in biocompatibility.

Specifically, the PHA is a natural thermoplastic polyester polymer that accumulates in microbial cells. Since it is a biodegradable material, it can be composted and finally decomposed into carbon dioxide, water, and organic waste without generating toxic waste. In particular, since the PHA resin is biodegradable in soil and sea, it has environmentally friendly characteristics.

The PHA may be a PHA homopolymer composed of one monomer or a PHA copolymer comprising two or more different monomers. Alternatively, the PHA may comprise the PHA homopolymer and the PHA copolymer.

When the PHA is a copolymer, it may be, for example, a copolymerized PHA comprising two or more different repeat units in which different monomers are randomly distributed in the polymer chains.

Examples of monomers that may be contained in the PHA include 2-hydroxybutyrate, lactic acid, glycolic acid, 3-hydroxybutyrate (hereinafter, referred to as 3-HB), 3-hydroxypropionate (hereinafter, referred to as 3-HP), 3-hydroxyvalerate (hereinafter, referred to as 3-HV), 3-hydroxyhexanoate (hereinafter, referred to as 3-HH), 3-hydroxyheptanoate (hereinafter, referred to as 3-HHep), 3-hydroxyoctanoate (hereinafter, referred to as 3-HO), 3-hydroxynonanoate (hereinafter, referred to as 3-HN), 3-hydroxydecanoate (hereinafter, referred to as 3-HD), 3-hydroxydodecanoate (hereinafter, referred to as 3-HDd), 4-hydroxybutyrate (hereinafter, referred to as 4-HB), 4-hydroxyvalerate (hereinafter, referred to as 4-HV), 5-hydroxyvalerate (hereinafter, referred to as 5-HV), and 6-hydroxyhexanoate (hereinafter, referred to as 6-HH). The PHA may comprise one or more monomers selected from the above.

Specifically, the polyhydroxyalkanoate (PHA) may comprise at least one monomer selected from the group consisting of 4-hydroxybutyrate (4-HB), 3-hydroxybutyrate (3-HB), 3-hydroxypropionate (3-HP), 3-hydroxyvalerate (3-HV), 3-hydroxyhexanoate (3-HH), 4-hydroxyvalerate (4-HV), 5-hydroxyvalerate (5-HV), and 6-hydroxyhexanoate (6-HH).

More specifically, the PHA may comprise a PHA homopolymer composed of a monomer selected from the group consisting of 4-HB, 3-HB, 3-HP, 3-HV, 3-HH, 4-HV, 5-HV, and 6-HH; or a PHA copolymer comprising one or more monomers selected from the group consisting of 4-HB, 3-HB, 3-HP, 3-HV, 3-HH, 4-HV, 5-HV, and 6-HH.

Specifically, the PHA may be a PHA homopolymer composed of a monomer selected from the group consisting of 4-HB and 3-HB; or a PHA copolymer comprising one or more monomers selected from the group consisting of 4-HB and 3-HB.

More specifically, the PHA may comprise a 4-HB monomer.

The PHA may comprise a PHA homopolymer composed of a 4-HB monomer.

In addition, the PHA may be a PHA copolymer comprising a 4-HB monomer.

For example, the PHA may be a PHA copolymer that comprises a 4-HB monomer and further comprises one monomer different from the 4-HB monomer, or further comprises two, three, four, five, six, or more monomers different from each other.

According to an embodiment of the present disclosure, the PHA may comprise a 4-HB monomer; and one or more monomers selected from the group consisting of 3-HB, 3-HP, 3-HV, 3-HH, 4-HV, 5-HV, and 6-HH. More specifically, the PHA may comprise a PHA copolymer comprising a 3-HB monomer and a 4-HB monomer.

For example, the PHA may be poly-3-hydroxybutyrate-co-4-hydroxybutyrate (hereinafter, referred to as 3HB-co-4HB).

In addition, the PHA may comprise isomers. For example, the PHA may comprise structural isomers, enantiomers, or geometric isomers. Specifically, the PHA may comprise structural isomers.

According to an embodiment of the present disclosure, in order to be suitably used as a binder for a secondary battery and to achieve the performance of an electrode and a secondary battery desired in the present disclosure, in particular, a PHA comprising the 4-HB monomer may be used. In such a case, it may be important to control the content ratio of the 4-HB monomer.

For example, the polyhydroxyalkanoate (PHA) may comprise a PHA copolymer comprising a 4-hydroxybutyrate (4-HB) monomer, wherein the 4-hydroxybutyrate (4-HB) monomer may be employed in an amount of 1% by mole to 99% by mole based on the total moles of monomers employed in the PHA copolymer.

Specifically, the PHA may comprise a PHA copolymer comprising the 3-HB monomer and the 4-HB monomer, wherein the PHA copolymer may comprise the 4-hydroxybutyrate (4-HB) monomer in an amount of 1% by mole to 99% by mole based on the total moles of the 3-hydroxybutyrate (3-HB) monomer and the 4-hydroxybutyrate (4-HB) monomer. For example, the PHA copolymer may comprise the 4-hydroxybutyrate (4-HB) monomer in an amount of 1% by mole or more, 2% by mole or more, 3% by mole or more, 5% by mole or more, or 10% by mole or more, and 99% by mole or less, 95% by mole or less, 90% by mole or less, 85% by mole or less, 80% by mole or less, 75% by mole or less, 70% by mole or less, 65% by mole or less, or 60% by mole or less, based on the total moles of the 3-hydroxybutyrate (3-HB) monomer and the 4-hydroxybutyrate (4-HB) monomer. Specifically, the PHA copolymer may comprise the 4-hydroxybutyrate (4-HB) monomer in an amount of 1% by mole to 99% by mole, 1% by mole to 95% by mole, 1% by mole to 90% by mole, 1% by mole to 89% by mole, 1% by mole to 85% by mole, 1% by mole to 80% by mole, 1% by mole to 79% by mole, 1% by mole to 75% by mole, 1% by mole to 70% by mole, 1% by mole to 65% by mole, 1% by mole to 60% by mole, 1% by mole to 55% by mole, 1% by mole to 50% by mole, 2% by mole to 55% by mole, 3% by mole to 55% by mole, 3% by mole to 50% by mole, 5% by mole to 55% by mole, 5% by mole to 50% by mole, 10% by mole to 55% by mole, 10% by mole to 50% by mole, 15% by mole to 60% by mole, 15% by mole to 55% by mole, 15% by mole to 50% by mole, 20% by mole to 60% by mole, 20% by mole to 55% by mole, 20% by mole to 50% by mole, 25% by mole to 60% by mole, 25% by mole to 55% by mole, 25% by mole to 50% by mole, 25% by mole to 45% by mole, 25% by mole to 40% by mole, 30% by mole to 60% by mole, 30% by mole to 55% by mole, 30% by mole to 50% by mole, 30% by mole to 45% by mole, 30% by mole to 40% by mole, 35% by mole to 60% by mole, 35% by mole to 55% by mole, 35% by mole to 50% by mole, 40% by mole to 60% by mole, 40% by mole to 55% by mole, or 45% by mole to 55% by mole, based on the total moles of the 3-hydroxybutyrate (3-HB) monomer and the 4-hydroxybutyrate (4-HB) monomer.

As another embodiment, the PHA copolymer may comprise the 4-HB monomer in an amount of 1% by mole to 99% by mole based on the total moles of the monomers employed in the PHA copolymer. For example, the content of the PHA monomer may be 1% by mole or more, 2% by mole or more, 3% by mole or more, 5% by mole or more, or 10% by mole or more, and 99% by mole or less, 95% by mole or less, 90% by mole or less, 85% by mole or less, 80% by mole or less, 75% by mole or less, 70% by mole or less, 65% by mole or less, or 60% by mole or less, based on the total moles of the monomers employed in the PHA copolymer. For example, the content of the PHA monomer may be 1% by mole to 99% by mole, 1% by mole to 95% by mole, 1% by mole to 90% by mole, 1% by mole to 89% by mole, 1% by mole to 85% by mole, 1% by mole to 80% by mole, 1% by mole to 79% by mole, 1% by mole to 75% by mole, 1% by mole to 70% by mole, 1% by mole to 65% by mole, 1% by mole to 60% by mole, 0.1 to 55% by mole, 0.5 to 60% by mole, 0.5 to 55% by mole, 1% by mole to 60% by mole, 1% by mole to 55% by mole, 1% by mole to 50% by mole, 2% by mole to 55% by mole, 3% by mole to 55% by mole, 3% by mole to 50% by mole, 5% by mole to 55% by mole, 5% by mole to 50% by mole, 10% by mole to 55% by mole, 10% by mole to 50% by mole, 15% by mole to 60% by mole, 15% by mole to 55% by mole, 15% by mole to 50% by mole, 20% by mole to 60% by mole, 20% by mole to 55% by mole, 20% by mole to 50% by mole, 25% by mole to 60% by mole, 25% by mole to 55% by mole, 25% by mole to 50% by mole, 25% by mole to 45% by mole, 25% by mole to 40% by mole, 30% by mole to 60% by mole, 30% by mole to 55% by mole, 30% by mole to 50% by mole, 30% by mole to 45% by mole, 30% by mole to 40% by mole, 35% by mole to 60% by mole, 35% by mole to 55% by mole, 35% by mole to 50% by mole, 40% by mole to 60% by mole, 40% by mole to 55% by mole, or 45% by mole to 55% by mole, based on the total moles of the monomers employed in the PHA copolymer.

In addition, the PHA comprises at least one of the 4-HB monomer, and the content of the 4-HB monomer may be controlled to adjust the crystallinity of the PHA. That is, the PHA may be a PHA copolymer with controlled crystallinity.

The PHA whose crystallinity is adjusted may be one in which its crystallinity and amorphousness are adjusted as the irregularities are increased in its molecular structure. Specifically, the types and ratios of the monomers or the types and/or contents of the isomers may be adjusted.

Meanwhile, the PHA may have a glass transition temperature (Tg) of, for example, -45°C to 80°C, -35°C to 80°C, -30°C to 80°C, -25°C to 75°C, -20°C to 70°C, -35°C to 5°C, -25°C to 5°C, -35°C to 0°C, -25°C to 0°C, -30°C to -10°C, -35°C to -15°C, -35°C to -20°C, -30°C to -20°C, -20°C to 0°C, -15°C to 0°C, or -15°C to -5°C.

The crystallization temperature (Tc) of the PHA, for example, may not be measured or may be, for example, 60°C to 120°C, 70°C to 120°C, 75°C to 120°C, 75°C to 115°C, 75°C to 110°C, or 90°C to 110°C.

The melting temperature (Tm) of the PHA, for example, may not be measured or may be, for example, 100°C to 170°C, for example, 110°C to 150°C, or, for example, 120°C to 140°C.

The PHA may have a weight average molecular weight (Mw) of, for example, 10,000 g/mole to 1,200,000 g/mole. For example, the weight average molecular weight of the PHA may be 50,000 g/mole to 1,200,000 g/mole, 100,000 g/mole to 1,200,000 g/mole, 50,000 g/mole to 1,000,000 g/mole, 100,000 g/mole to 1,000,000 g/mole, 200,000 g/mole to 1,200,000 g/mole, 250,000 g/mole to 1,150,000 g/mole, 300,000 g/mole to 1,100,000 g/mole, 350,000 g/mole to 1,000,000 g/mole, 350,000 g/mole to 950,000 g/mole, 100,000 g/mole to 900,000 g/mole, 200,000 g/mole to 800,000 g/mole, 200,000 g/mole to 700,000 g/mole, 250,000 g/mole to 650,000 g/mole, 200,000 g/mole to 400,000 g/mole, 300,000 g/mole to 800,000 g/mole, 300,000 g/mole to 600,000 g/mole, 500,000 g/mole to 1,200,000 g/mole, 500,000 g/mole to 1,000,000 g/mole 550,000 g/mole to 1,050,000 g/mole, 550,000 g/mole to 900,000 g/mole, or 600,000 g/mole to 900,000 g/mole.

The PHA may have a melt index (MI) of 0.1 g/10 minutes or more, 0.5 g/10 minutes or more, 1 g/10 minutes or more, or 2 g/10 minutes or more, and 500 g/10 minutes or less, 450 g/10 minutes or less, 400 g/10 minutes or less, 350 g/10 minutes or less, 300 g/10 minutes or less, 200 g/10 minutes or less, 100 g/10 minutes or less, 80 g/10 minutes or less, 50 g/10 minutes or less, 30 g/10 minutes or less, 20 g/10 minutes or less, 10 g/10 minutes or less, or 5 g/10 minutes or less, when measured at a temperature of 165°C under a load of 5.0 kg in accordance with ASTM D1238. Specifically, it may be 0.1 g/10 minutes to 500 g/10 minutes, 0.1 g/10 minutes to 400 g/10 minutes, 1 g/10 minutes to 500 g/10 minutes, 10 g/10 minutes to 500 g/10 minutes, 0.1 g/10 minutes to 300 g/10 minutes, 300 g/10 minutes to 500 g/10 minutes, 0.1 g/10 minutes to 100 g/10 minutes, 100 g/10 minutes to 200 g/10 minutes, 200 g/10 minutes to 300 g/10 minutes, 300 g/10 minutes to 400 g/10 minutes, 400 g/10 minutes to 500 g/10 minutes, 0.1 g/10 minutes to 80 g/10 minutes, 0.1 g/10 minutes to 50 g/10 minutes, 0.1 g/10 minutes to 30 g/10 minutes, 0.1 g/10 minutes to 20 g/10 minutes, 0.1 g/10 minutes to 10 g/10 minutes, 1 g/10 minutes to 30 g/10 minutes, 1 g/10 minutes to 20 g/10 minutes, 1 g/10 minutes to 10 g/10 minutes, 0.1 g/10 minutes to 2 g/10 minutes, 2 g/10 minutes to 5 g/10 minutes, 5 g/10 minutes to 8 g/10 minutes, 8 g/10 minutes to 12 g/10 minutes, 12 g/10 minutes to 16 g/10 minutes, 16 g/10 minutes to 20 g/10 minutes, or 20 g/10 minutes to 30 g/10 minutes.

For example, the polyhydroxyalkanoate (PHA) may have a glass transition temperature (Tg) of -45°C to 80°C and a melt index (MI) of 0.1 g/10 minutes to 500 g/10 minutes when measured at a temperature of 165°C under a load of 5.0 kg in accordance with ASTM D1238.

Meanwhile, the PHA may comprise a combination of two or more PHAs having different crystallinities. That is, the PHA may be adjusted to have the content of a 4-HB monomer in the specific range by mixing two or more types of PHAs having different crystallinities.

Specifically, the PHA may comprise a first PHA resin, a second PHA resin, or a mixed resin of the first PHA resin and the second PHA resin.

The first PHA resin and the second PHA resin may be distinguished in terms of the content of a 4-HB monomer, glass transition temperature (Tg), crystallization temperature (Tc), and melting temperature (Tm).

Specifically, the first PHA resin may comprise the 4-HB monomer in an amount of, for example, 15% by mole to 60% by mole, 15% by mole to 55% by mole, 20% by mole to 55% by mole, 25% by mole to 55% by mole, 30% by mole to 55% by mole, 35% by mole to 55% by mole, 20% by mole to 50% by mole, 25% by mole to 50% by mole, 30% by mole to 50% by mole, 35% by mole to 50% by mole, or 20% by mole to 40% by mole, based on the total moles of monomers employed in the first PHA resin.

The glass transition temperature (Tg) of the first PHA resin may be, for example, -45°C to -10°C, -35°C to -10°C, -35°C to -15°C, -35°C to -20°C, or -30°C to -20°C.

The crystallization temperature (Tc) of the first PHA resin, for example, may not be measured or may be, for example, 60°C to 120°C, 60°C to 110°C, 70°C to 120°C, or 75°C to 115°C.

The melting temperature (Tm) of the first PHA resin, for example, may not be measured or may be, for example, 100°C to 170°C, 100°C to 160°C, 110°C to 160°C, or 120°C to 150°C.

The first PHA resin may have a weight average molecular weight (Mw) of, for example, 10,000 g/mole to 1,200,000 g/mole, 10,000 g/mole to 1,000,000 g/mole, 50,000 g/mole to 1,000,000 g/mole, 50,000 g/mole to 1,200,000 g/mole, 200,000 g/mole to 1,200,000 g/mole, 300,000 g/mole to 1,000,000 g/mole, 100,000 g/mole to 900,000 g/mole, 500,000 g/mole to 900,000 g/mole, 200,000 g/mole to 800,000 g/mole, or 200,000 g/mole to 400,000 g/mole.

The first PHA resin may have a melt index (MI) of 0.1 g/10 minutes or more, 0.5 g/10 minutes or more, 1 g/10 minutes or more, or 2 g/10 minutes or more, and 500 g/10 minutes or less, 450 g/10 minutes or less, 400 g/10 minutes or less, 350 g/10 minutes or less, 300 g/10 minutes or less, 200 g/10 minutes or less, 100 g/10 minutes or less, 80 g/10 minutes or less, 50 g/10 minutes or less, 30 g/10 minutes or less, 20 g/10 minutes or less, 10 g/10 minutes or less, or 5 g/10 minutes or less, when measured at a temperature of 165°C under a load of 5.0 kg in accordance with ASTM D1238. Specifically, it may be 0.1 g/10 minutes to 500 g/10 minutes, 0.1 g/10 minutes to 400 g/10 minutes, 1 g/10 minutes to 500 g/10 minutes, 10 g/10 minutes to 500 g/10 minutes, 0.1 g/10 minutes to 300 g/10 minutes, 300 g/10 minutes to 500 g/10 minutes, 0.1 g/10 minutes to 100 g/10 minutes, 100 g/10 minutes to 200 g/10 minutes, 200 g/10 minutes to 300 g/10 minutes, 300 g/10 minutes to 400 g/10 minutes, 400 g/10 minutes to 500 g/10 minutes, 0.1 g/10 minutes to 80 g/10 minutes, 0.1 g/10 minutes to 50 g/10 minutes, 0.1 g/10 minutes to 30 g/10 minutes, 0.1 g/10 minutes to 20 g/10 minutes, 0.1 g/10 minutes to 10 g/10 minutes, 1 g/10 minutes to 30 g/10 minutes, 1 g/10 minutes to 20 g/10 minutes, 1 g/10 minutes to 10 g/10 minutes, 0.1 g/10 minutes to 2 g/10 minutes, 2 g/10 minutes to 5 g/10 minutes, 5 g/10 minutes to 8 g/10 minutes, 8 g/10 minutes to 12 g/10 minutes, 12 g/10 minutes to 16 g/10 minutes, 16 g/10 minutes to 20 g/10 minutes, or 20 g/10 minutes to 30 g/10 minutes.

Meanwhile, the second PHA resin may comprise the 4-HB monomer in an amount of 0.1% by mole to 30% by mole based on the total moles of monomers employed in the second PHA resin. For example, the second PHA may comprise the 4-HB monomer in an amount of 0.1% by mole to 30% by mole, 0.5% by mole to 30% by mole, 1% by mole to 30% by mole, 3% by mole to 30% by mole, 1% by mole to 28% by mole, 1% by mole to 25% by mole, 1% by mole to 24% by mole, 1% by mole to 20% by mole, 1% by mole to 15% by mole, 2% by mole to 25% by mole, 3% by mole to 25% by mole, 3% by mole to 24% by mole, 5% by mole to 24% by mole, 5% by mole to 20% by mole, greater than 5% by mole to less than 20% by mole, 7% by mole to 20% by mole, 10% by mole to 20% by mole, 15% by mole to 25% by mole, or 15% by mole to 24% by mole, based on the total moles of monomers employed in the second PHA resin.

The first PHA resin and the second PHA resin may be different from each other in terms of the content of a 4-HB monomer.

The glass transition temperature (Tg) of the second PHA resin may be, for example, -30°C to 80°C, for example, -30°C to 10°C, for example, -25°C to 5°C, for example, -25°C to 0°C, for example, -20°C to 0°C, or, for example, -15°C to 0°C.

The glass transition temperature (Tg) of the first PHA resin and the glass transition temperature (Tg) of the second PHA resin may be different from each other.

The second PHA resin may have a crystallization temperature (Tc) of, for example, 70°C to 120°C, for example, 75°C to 115°C, or 80°C to 110°C, or, for example, may not be measured.

The second PHA resin may have a melting temperature (Tm) of, for example, 100°C to 170°C, for example, 105°C to 165°C, for example, 110°C to 160°C, for example, 100°C to 150°C, for example, 115°C to 155°C, for example, 120°C to 160°C, or, for example, 120°C to 150°C.

The second PHA resin may have a weight average molecular weight (Mw) of 10,000 g/mole to 1,200,000 g/mole, 50,000 g/mole to 1,100,000 g/mole, 100,000 g/mole to 1,000,000 g/mole, 300,000 g/mole to 1,000,000 g/mole, 100,000 g/mole to 900,000 g/mole, 200,000 g/mole to 800,000 g/mole, 200,000 g/mole to 600,000 g/mole, 200,000 g/mole to 400,000 g/mole, or 400,000 g/mole to 700,000 g/mole.

Specifically, the first PHA resin has a glass transition temperature (Tg) of -35°C to -15°C, the second PHA resin satisfies at least one characteristic selected from a glass transition temperature (Tg) of -15°C to 0°C, a crystallization temperature (Tc) of 80°C to 110°C, and a melting temperature (Tm) of 120°C to 160°C, and the glass transition temperature (Tg) of the first PHA resin and the glass transition temperature (Tg) of the second PHA resin may be different from each other. **In** addition, the crystallization temperature (Tc) and melting temperature (Tm) of the first PHA resin may not be measured.

The second PHA resin may have a melt index (MI) of 0.1 g/10 minutes or more, 0.5 g/10 minutes or more, 1 g/10 minutes or more, or 2 g/10 minutes or more, and 500 g/10 minutes or less, 450 g/10 minutes or less, 400 g/10 minutes or less, 350 g/10 minutes or less, 300 g/10 minutes or less, 200 g/10 minutes or less, 100 g/10 minutes or less, 80 g/10 minutes or less, 50 g/10 minutes or less, 30 g/10 minutes or less, 20 g/10 minutes or less, 10 g/10 minutes or less, or 5 g/10 minutes or less, when measured at a temperature of 165°C under a load of 5.0 kg in accordance with ASTM D1238. Specifically, it may be 0.1 g/10 minutes to 500 g/10 minutes, 0.1 g/10 minutes to 400 g/10 minutes, 1 g/10 minutes to 500 g/10 minutes, 10 g/10 minutes to 500 g/10 minutes, 0.1 g/10 minutes to 300 g/10 minutes, 300 g/10 minutes to 500 g/10 minutes, 0.1 g/10 minutes to 100 g/10 minutes, 100 g/10 minutes to 200 g/10 minutes, 200 g/10 minutes to 300 g/10 minutes, 300 g/10 minutes to 400 g/10 minutes, 400 g/10 minutes to 500 g/10 minutes, 0.1 g/10 minutes to 80 g/10 minutes, 0.1 g/10 minutes to 50 g/10 minutes, 0.1 g/10 minutes to 30 g/10 minutes, 0.1 g/10 minutes to 20 g/10 minutes, 0.1 g/10 minutes to 10 g/10 minutes, 1 g/10 minutes to 30 g/10 minutes, 1 g/10 minutes to 20 g/10 minutes, 1 g/10 minutes to 10 g/10 minutes, 0.1 g/10 minutes to 2 g/10 minutes, 2 g/10 minutes to 5 g/10 minutes, 5 g/10 minutes to 8 g/10 minutes, 8 g/10 minutes to 12 g/10 minutes, 12 g/10 minutes to 16 g/10 minutes, 16 g/10 minutes to 20 g/10 minutes, or 20 g/10 minutes to 30 g/10 minutes.

The melt index (MI) of the first PHA resin and the melt index (MI) of the second PHA resin may be different from each other.

When the first PHA resin and the second PHA resin each satisfy at least one of the content of a 4-HB monomer, glass transition temperature (Tg), crystallization temperature (Tc), melting temperature (Tm), and melt index (MI) in the above ranges, it may be more advantageous for achieving the effect desired in the present disclosure.

In addition, the first PHA resin and the second PHA resin may each be a PHA whose crystallinity is controlled.

For example, the first PHA resin may comprise an amorphous PHA resin (hereinafter, referred to as an aPHA resin), and the second PHA resin may comprise a semi-crystalline PHA resin (hereinafter, referred to as an scPHA resin).

Specifically, the first PHA resin may be an aPHA resin or a mixed resin of an aPHA resin and an scPHA resin.

Specifically, the second PHA resin may be an scPHA resin or a mixed resin of an aPHA resin and an scPHA resin.

The aPHA resin and the scPHA resin may be distinguished in terms of the content of a 4-HB monomer, glass transition temperature (Tg), crystallization temperature (Tc), melting temperature (Tm), melt index (MI), or the like.

The aPHA resin may comprise a 4-HB monomer in an amount of, for example, 25% by mole to 50% by mole based on the total moles of monomers employed in the PHA resin.

The aPHA resin may have a glass transition temperature (Tg) of, for example, - 35°C to -20°C.

The crystallization temperature (Tc) of the aPHA resin may not be measured.

The melting temperature (Tm) of the aPHA resin may not be measured.

The scPHA resin may comprise a 4-HB monomer in an amount of, for example, 1% by mole to less than 25% by mole based on the total moles of monomers employed in the PHA resin.

The scPHA resin may have a glass transition temperature (Tg) of -20°C to 0°C.

The scPHA resin may have a crystallization temperature (Tc) of 75°C to 115°C.

The scPHA resin may have a melting temperature (Tm) of 110°C to 160°C.

According to an embodiment of the present disclosure, the binder may be employed in an amount of 0.1% by weight or more, 0.2% by weight or more, 0.3% by weight or more, 0.4% by weight or more, 0.5% by weight or more, 1% by weight or more, 2% by weight or more, 3% by weight or more, or 5% by weight or more, and 20% by weight or less, 18% by weight or less, 17% by weight or less, 16% by weight or less, 15% by weight or less, 10% by weight or less, 8% by weight or less, 7% by weight or less, 6% by weight or less, or 5% by weight or less, based on the total weight of the electrode active material composition.

Specifically, the electrode active material composition may comprise the binder in an amount of 0.1% by weight to 20% by weight, 0.2% by weight to 18% by weight, 0.5% by weight to 15% by weight, 1% by weight to 15% by weight, 3% by weight to 15% by weight, 5% by weight to 15% by weight, or 5% by weight to 10% by weight, based on the total weight of the electrode active material composition.

If the content of the binder is less than the above range, the effect of using the binder may be insignificant. If it exceeds the above range, the capacity of a secondary battery per volume may decrease due to a relative decrease in the content of the electrode active material as the content of the binder increases.

According to another embodiment of the present disclosure, when the PHA comprises a mixed resin of the first PHA resin and the second PHA resin, the weight ratio of the first PHA resin to the second PHA resin may be, for example, 1:0.5 to 3, for example, 1:0.5 to 2.5, or, for example, 1:0.5 to 2.

According to another embodiment of the present disclosure, the weight ratio of the electrode active material, binder, and conductive material may be (4.0 to 9.8):(0.1 to 3.0):(0.1 to 3.0), (6.0 to 9.6):(0.2 to 2.0):(0.2 to 2.0), (6.0 to 9.0):(0.5 to 2.0):(0.5 to 2.0), or (7.0 to 9.0):(0.5 to 1.5):(0.5 to 1.5).

In the electrode active material composition, when the content of the binder and the weight ratio of the electrode active material, binder, and conductive material satisfy the above ranges, the adhesive strength and the performance of a secondary battery can be efficiently enhanced while the use of the binder is reduced.

In addition, the electrode active material composition may further comprise various commonly used binders, such as poly(vinylidene fluoride-hexafluoropropylene) (PVdF-co-HFP), poly(vinylidene fluoride) (PVdF), polyacrylonitrile, polymethyl methacrylate, styrene-butadiene rubber (SBR), carboxyl methyl cellulose (CMC), poly(acrylic acid) (PAA), poly(vinyl alcohol) (PVA), and poly(vinylacetate).

When the PHA is mixed with the various types of binders commonly used, the mixing ratio thereof is not particularly limited as long as the effect desired in the present disclosure is not impaired.

In addition, the binder may be employed in a negative electrode active material composition applied to a negative electrode, a positive electrode active material composition applied to a positive electrode, or both. For example, the binder may be employed in a negative active material composition to efficiently achieve the effect desired in the present disclosure.

Electrode active material

The electrode active material composition according to an embodiment of the present disclosure may comprise an electrode active material.

The electrode active material may comprise a negative electrode active material, a positive electrode active material, or both. Specifically, the electrode active material may be a negative electrode active material.

There is no particular limitation on the negative active material as long as it is a material that can reversibly intercalate or deintercalate lithium ($Li^+$).

The negative electrode active material may comprise, for example, at least one selected from the group consisting of a carbon-based negative electrode active material, a silicon-based negative electrode active material, lithium metal, and a lithium alloy.

The carbon-based negative electrode active material may comprise low-crystalline carbon, high-crystalline carbon, or a mixture thereof. The low-crystalline carbon may comprise soft carbon, hard carbon, or a mixture thereof. The high-crystalline carbon may comprise at least one high-temperature calcined carbon selected from the group consisting of natural graphite, kish graphite, pyrolytic carbon, mesophase pitch-based carbon fibers, meso-carbon microbeads, mesophase pitches, and petroleum or coal tar pitch-derived cokes.

The silicon-based negative electrode active material may comprise, for example, at least one selected from the group consisting of Si, silicon oxide particles ($SiO_x$, $0 < x \leq 2$), Si-metal alloys, and alloys of Si and silicon oxide particles ($SiO_x$, $0 < x \leq 2$). The silicon oxide particles ($SiO_x$, $0 < x \leq 2$) may be a composite composed of crystalline $SiO_2$ and amorphous Si.

The lithium metal may be in the form of a lithium metal thin film or lithium metal powder.

The lithium alloy may be an alloy of, for example, lithium (Li) with a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Meanwhile, examples of the positive electrode active material include layered compounds or compounds substituted with one or more transition metals such as lithium cobalt oxide ($LiCoO_2$); lithium nickel oxide ($LiNiO_2$); Li$[Ni_aCo_bMn_cM^1_d]O_2$ (in this formula, $M^1$ is one element selected from the group consisting of Al, Ga, and In, or two or more of these elements, $0.3 \leq a < 1.0$, $0 \leq b \leq 0.5$, $0 \leq c \leq 0.5$, $0 \leq d \leq 0.1$, and $a + b + c + d=1$); $Li(Li_eM^2_{f-e-f}M^3_f)O_{2-g}A_g$ (in this formula, $0 \leq e \leq 0.2$, $0.6 \leq f \leq 1$, $0 \leq f \leq 0.2$, $0 \leq g \leq 0.2$, $M^2$ comprises Mn and at least one selected from the group consisting of Ni, Co, Fe, Cr, V, Cu, Zn, and Ti, $M^3$ is at least one selected from the group consisting of Al, Mg, and B, and A is at least one selected from the group consisting of P, F, S, and N); $Li_{1+h}Mn_{2-h}O_4$ (in this formula, $0 \leq h \leq 0.33$), lithium manganese oxide such as $LiMnO_3$, $LiMn_2O_3$, and $LiMnO_2$; lithium copper oxide ($Li_2CuO_2$); vanadium oxide such as $LiV_3O_8$, $V_2O_5$, $Cu_2V_2O_7$; Ni-site type lithium nickel oxide represented by the formula $LiNi_{1-i}M^4_iO_2$ (in this formula, $M^4$ is Co, Mn, Al, Cu, Fe, Mg, B, or Ga, and $0.01 \leq i \leq 0.3$); lithium manganese composite oxide represented by the formula $LiMn_{2-j}M^5_jO_2$ (in this formula, $M^5$ is Co, Ni, Fe, Cr, Zn, or Ta, and $0.01 \leq j \leq 0.1$) or $Li_2Mn_3M^6O_8$ (in this formula, $M^6$ is Fe, Co, Ni, Cu, or Zn); $LiMn_2O_4$ where some of the Li in this formula is replaced with an alkaline earth metal ion; disulfide compounds; $LiFe_3O_4$; and $Fe_2(MoO_4)_3$, but it is not limited thereto.

The electrode active material may be employed in an amount of 40% by weight or more, 50% by weight or more, 60% by weight or more, 65% by weight or more, 70% by weight or more, 75% by weight or more, or 80% by weight or more, and 98% by weight or less, 95% by weight or less, 90% by weight or less, 88% by weight or less, or 85% by weight or less, based on the total weight of the electrode active material composition.

## Conductive material

The electrode active material composition according to an embodiment of the present disclosure may comprise a conductive material.

The conductive material is intended to enhance electrical conductivity. There is no particular limitation as long as it is an electronically conductive material that does not cause a chemical change in a secondary battery.

For example, the conductive material may be graphite such as natural graphite and synthetic graphite; carbon black such as acetylene black, Ketjen black, channel black, furnace black, lamp black, thermal black, and Super P; conductive fibers such as carbon fibers and metal fibers; conductive tubes such as carbon nanotubes; metal powders such as fluorocarbon, aluminum, and nickel powder; conductive whiskers such as zinc oxide and potassium titanate; or conductive metal oxides such as titanium oxide. Specifically, the conductive material may comprise carbon black such as acetylene black, Ketjen black, channel black, furnace black, lamp black, thermal black, and Super P.

The conductive material may be employed in an amount of 1% by weight or more, 2% by weight or more, 3% by weight or more, 5% by weight or more, or 10% by weight or more, and 30% by weight or less, 25% by weight or less, or 20% by weight or less, based on the total weight of the electrode active material composition.

## Additive

The electrode active material composition according to an embodiment of the present disclosure may comprise an additive in addition to the electrode active material, binder, and conductive material.

The additive may comprise, for example, viscosity modifiers, fillers, dispersants, or combinations thereof.

The viscosity modifier may be carboxymethyl cellulose, polyacrylic acid, or the like. The viscosity may be adjusted to facilitate the coating process on an electrode current collector by adding the viscosity modifier.

The filler is an auxiliary component that suppresses the expansion of an electrode. It is not particularly limited as long as it is a fibrous material that does not cause a chemical change in a secondary battery. For example, it may be a fibrous material such as an olefin polymer such as polyethylene and polypropylene, glass fiber, or carbon fiber.

The dispersant may comprise an aqueous dispersant or an organic dispersant such as N-methyl-2-pyrrolidone.

## [Electrode]

According to an embodiment of the present disclosure, there is provided an electrode, which comprises the electrode active material composition.

Specifically, the electrode comprises the electrode active material, the binder, and the conductive material, wherein the binder may comprise a polyhydroxyalkanoate (PHA).

For example, the electrode may be manufactured by mixing the electrode active material composition with a solvent to prepare an electrode slurry (negative electrode slurry or positive electrode slurry), applying the same onto an electrode (negative electrode or positive electrode) current collector, drying the same, and then pressing the same.

The solvent contained in the electrode slurry may be an organic solvent, such as N-methyl-2-pyrrolidone (NMP), dimethyl formamide (DMF), acetone, and dimethyl acetamide, or water. These solvents may be used alone or in combination of two or more. The amount of solvent used is sufficient to dissolve and disperse the electrode active material, binder, and conductive material, taking into account the coating thickness of the slurry and the manufacturing yield.

The electrode may comprise a negative electrode, a positive electrode, or both.

The negative electrode may be manufactured by a conventional method known in the art. For example, it may be manufactured by preparing a negative electrode slurry comprising the electrode active material composition (negative electrode active material composition) and a solvent, applying it onto a negative electrode current collector, drying it, and then pressing it.

The negative electrode collector used in the negative electrode may have a thickness of 3 $\mu$m to 500 $\mu$m. The negative electrode collector is not particularly limited as long as it has conductivity without causing a chemical change in a secondary battery. For example, copper, gold, stainless steel, aluminum, nickel, titanium, sintered carbon, or copper or stainless steel surface-treated with carbon, nickel, titanium, or silver, or aluminum-cadmium alloy may be used. In addition, the bonding strength of the negative electrode active material may be strengthened by forming fine irregularities on the surface. It may be used in various forms such as film, sheet, foil, net, porous body, foam, and non-woven body.

The positive electrode may be manufactured by a conventional method known in the art. For example, the positive electrode may be manufactured by preparing a positive electrode slurry comprising the electrode active material composition (positive electrode active material composition) and a solvent, applying (coating) it onto a current collector of a metallic material, pressing it, and then drying it.

The current collector of a metallic material is a highly conductive metal to which the positive electrode slurry can be easily adhered, and it is not particularly limited as long as it has high conductivity within the voltage range of the secondary battery without causing a chemical change in the secondary battery. For example, stainless steel, aluminum, nickel, titanium, sintered carbon, or aluminum or stainless steel surface-treated with carbon, nickel, titanium, or silver may be used. In addition, the bonding strength of the positive electrode active material may be strengthened by forming fine irregularities on the surface of the current collector. The current collector may be used in various forms such as film, sheet, foil, net, porous body, foam, and non-woven body. It may have a thickness of 3 $\mu$m to 500 $\mu$m.

**[Secondary battery]**

According to an embodiment of the present disclosure, there is provided a secondary battery, which comprises a negative electrode, a positive electrode, a separator interposed between the negative electrode and the positive electrode, and an electrolyte, wherein at least one of the negative electrode and the positive electrode comprises a binder comprising a polyhydroxyalkanoate (PHA).

The separator is used to physically separate the two electrodes in the secondary battery of the present disclosure. A separator commonly used in a lithium secondary battery may be used without any particular limitation. In particular, it is desirable to have low resistance to ion movement of the electrolyte and excellent electrolyte wetting capability.

The separation may be formed of a porous substrate. Any porous substrate commonly used in electrochemical devices may be used as the porous substrate. For example, a polyolefin porous membrane or non-woven fabric may be used, but it is not particularly limited thereto.

Examples of the polyolefin porous membrane include membranes formed using polyolefin polymers such as polyethylene, such as high-density polyethylene, linear low-density polyethylene, low-density polyethylene, and ultra-high molecular weight polyethylene, polypropylene, polybutylene, and polypentene, either alone or as a mixture thereof.

Examples of the nonwoven fabrics include, in addition to polyolefin nonwoven fabrics, nonwoven fabrics formed from polymers such as polyethylene terephthalate, polybutylene terephthalate, polyester, polyacetal, polyamide, polycarbonate, polyimide, polyether ether ketone, polyether sulfone, polyphenylene oxide, polyphenylene sulfide, and polyethylene naphthalate, either alone or as a mixture thereof. The nonwoven fabric may have a structure of a spunbonded nonwoven fabric or a melt-blown nonwoven fabric composed of long fibers.

The thickness of the porous substrate is not particularly limited, but it may be 1 to 100 $\mu$m or 5 to 50 $\mu$m.

The size and porosity of the pores present in the porous substrate are not particularly limited as well. For example, the pores present in the porous substrate may have a size of 0.001 to 50 $\mu$m and a porosity of 10 to 95%.

Meanwhile, the electrolyte may comprise a lithium salt.

The lithium salt can act as a passage through which lithium ions (Li$^+$) can move.

The lithium salt is not particularly limited in the present disclosure, and any lithium salt commonly used in an electrolyte for secondary batteries can be used without limitation.

Specifically, the lithium salt may comprise at least one selected from the group consisting of $LiPF_6$, $LiAsF_6$, LiFSI, LiTFSI, $LiCF_3SO_3$, $LiN(CF_3SO_2)_2$, $LiBF_4$, $LiBF_6$, $LiSbF_6$, $LiN(C_2F_5SO_2)_2$, and $LiSO_3CF_3$. More specifically, the lithium salt may comprise at least one selected from the group consisting of $LiPF_6$, $LiAsF_6$, LiFSI, LiTFSI, and $LiBF_4$.

In addition, the electrolyte may comprise an organic solvent.

Organic solvents commonly used in an electrolyte for secondary batteries can be used without limitation. As a representative, any one or a mixture of two or more selected from the group consisting of propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfuroxide, acetonitrile, dimethoxyethane, diethoxyethane, vinylene carbonate, sulfolane, gamma-butyrolactone, propylene sulfite, and tetrahydrofuran may be typically used.

Specifically, the organic solvent may comprise at least one selected from the group consisting of ethylene carbonate (EC), diethyl carbonate (DEC), and dimethyl carbonate (DMC).

In addition, the electrolyte may further comprise an additive such as an overcharge prevention agent to be contained in a conventional electrolyte.

The secondary battery according to the present disclosure can be manufactured by laminating (stacking) and folding a separator and electrodes in addition to the common winding process.

The shape of the secondary battery is not particularly limited and may include various shapes such as cylindrical, laminated, and coin-shaped.

When the secondary battery according to an embodiment of the present disclosure is charged at a constant current of 0.05 C until the voltage reaches 3 V and then discharged at a constant current of 0.05 C until the voltage reaches 0.01 V, the Coulombic efficiency represented by the following Equation 1 may be, for example, 90% or more, for example, 92% or more, for example, 93% or more, for example, 94% or more, or, for example, 95% or more.

[Equation 1]

$$\text{Coulombic efficiency (\%)} = \text{discharge capacity/charge capacity} \times 100$$

In addition, the secondary battery according to an embodiment of the present disclosure may have a specific capacity of 250 mAhg$^{-1}$ or more, 270 mAhg$^{-1}$ or more, 280 mAhg$^{-1}$ or more, 285 mAhg$^{-1}$ or more, 290 mAhg$^{-1}$ or more, 295 mAhg$^{-1}$ or more, 300 mAhg$^{-1}$ or more, 310 mAhg$^{-1}$ or more, 320 mAhg$^{-1}$ or more, or 330 mAhg$^{-1}$ or more, when measured after repeat of the above charging and discharging twice.

The secondary battery according to an embodiment of the present disclosure has low resistance by virtue of the strong adhesive force of the binder even when the secondary battery is cycled repeatedly, can maintain a high-capacity cycle for a long period of time even when the amount of binder is reduced, and can maintain excellent structural stability even after a long-term cycle.

In addition, the secondary battery according to an embodiment of the present disclosure can have flame retardancy such that combustion does not expand and no hazardous substances are generated when incinerated by using a polyhydroxyalkanoate (PHA) as the binder.

Accordingly, the secondary battery according to the present disclosure not only can be used in battery cells used as power sources for small devices, but it can also be advantageously utilized in unit cells of medium- to large-sized battery modules comprising a plurality of battery cells.

The battery module can be used as a power source for medium- and large-sized devices that require high-temperature stability, long cycle characteristics, and high capacity characteristics.

Examples of the medium- and large-sized devices include power tools that are powered by an electric motor; electric vehicles including electric vehicles (EVs), hybrid electric vehicles (HEVs), and plug-in hybrid electric vehicles (PHEVs); electric two-wheeled vehicles including electric bicycles (E-bikes) and electric scooters (E-scooters); electric golf carts; and power storage systems, but it is not limited thereto.

**Mode for Carrying Out the Invention**

Hereinafter, the present disclosure will be described in detail with reference to Examples. But the following examples are intended to illustrate the present disclosure, and the scope of the present disclosure is not limited thereto only.

**Example 1**

<Preparation of a negative electrode>

Preparation of a negative active material composition and a negative electrode slurry

Graphite as a negative active material, PHA (3-HB-co-4-HB, aPHA) (manufacturer: CJ) as a binder, and Super P as a conductive material were mixed at a weight ratio of 8:1:1 to prepare a negative electrode active material composition.

80 mg of the negative electrode active material composition was added to 0.5 ml of N-methyl-2-pyrrolidone (NMP) as a solvent to prepare a negative electrode slurry.

Preparation of a negative electrode

The negative electrode slurry was coated onto a 20-$\mu$m copper foil to a thickness of 15 $\mu$m, then dried in a vacuum oven at 100°C for 12 hours, and press-rolled to manufacture a negative electrode.

< Preparation of a positive electrode>

Preparation of a positive active material composition and a positive electrode slurry

$LiCoO_2$ as a positive active material, poly(vinylidene fluoride) (PVdF) as a binder, and carbon black as a conductive material were mixed at a weight ratio of 8:1:1 to prepare a positive electrode active material composition.
80 mg of the positive electrode active material composition was added to 0.5 ml of N-methyl-2-pyrrolidone (NMP) as a solvent to prepare a positive electrode slurry.

Preparation of a positive electrode

The positive electrode slurry was coated onto an 18-$\mu$m aluminum (Al) foil to a thickness of 15 $\mu$m, then dried in a vacuum oven at 100°C for 12 hours, and press-rolled to manufacture a positive electrode.

<Manufacture of a lithium secondary battery>

The negative electrode prepared above was punched to have a surface area of 1.2 cm$^2$, and the positive electrode prepared above was punched to have a surface area of 1.2 cm$^2$, to manufacture a coin cell.
$LiPF_6$ was dissolved in a mixed solvent of ethylene carbonate (EC) and dimethyl carbonate (DMC) at 1:1 (volume ratio) at a concentration of 1 M to prepare an electrolyte.
Thereafter, a crimper was used to seal the coin cell, which was then subjected to a constant voltage charging procedure of charging at a constant current of about 0.05 C and maintaining the voltage until it reached approximately 1/6 of the current.

**Example 2**

A negative electrode active material composition, a negative electrode, a positive electrode, and a lithium secondary battery were manufactured using the same method as in Example 1, except that graphite as a negative active material, PHA (3-HB-co-4-HB, aPHA) (manufacturer: CJ) as a binder, and Super P as a conductive material were mixed at a weight ratio of 8.5:0.5: 1.

**Comparative Example 1**

A negative electrode active material composition, a negative electrode, a positive electrode, and a lithium secondary battery were manufactured using the same method as in Example 1, except that poly(vinylidene fluoride) (PVdF) was used as a binder when the negative electrode active material composition was prepared.

**Evaluation Example**

**Evaluation Example 1: Evaluation of solubility**

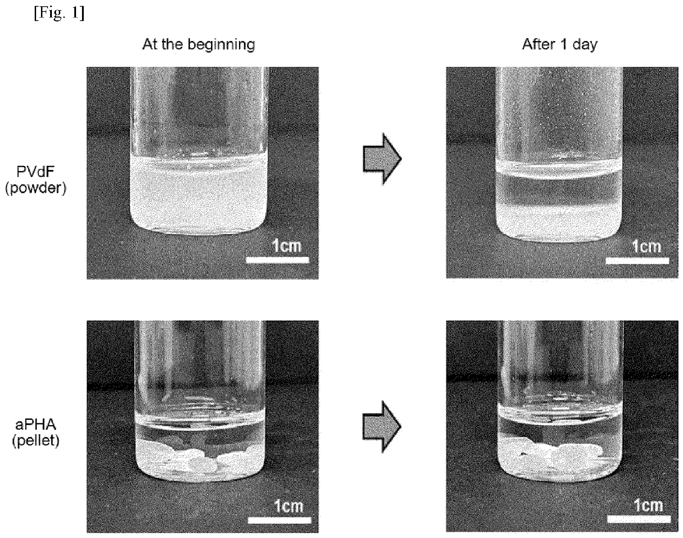

10 mg of PVdF (powder) and 10 mg of aPHA (pellet) used as a binder in Comparative Example 1 and Example 1 were each added to a mixed solvent of ethylene carbonate (EC) and dimethyl carbonate (DMC) at 1:1 (volume ratio) and left for 1 day. The solubility of each binder was observed at the beginning and 1 day after the addition. The results are shown in Fig. 1.
As can be seen from Fig. 1, for PVdF used in Comparative Example 1, the PVdF (powder) was initially mixed with the mixed solvent, but after 1 day, it separated from the mixed solvent and formed a layer. For aPHA (pellet) used in Example 1, it was not dissolved in the mixed solvent initially and even after 1 day of addition, but remained as aPHA (pellet).

**Evaluation Example 2: Evaluation of oxidation resistance**

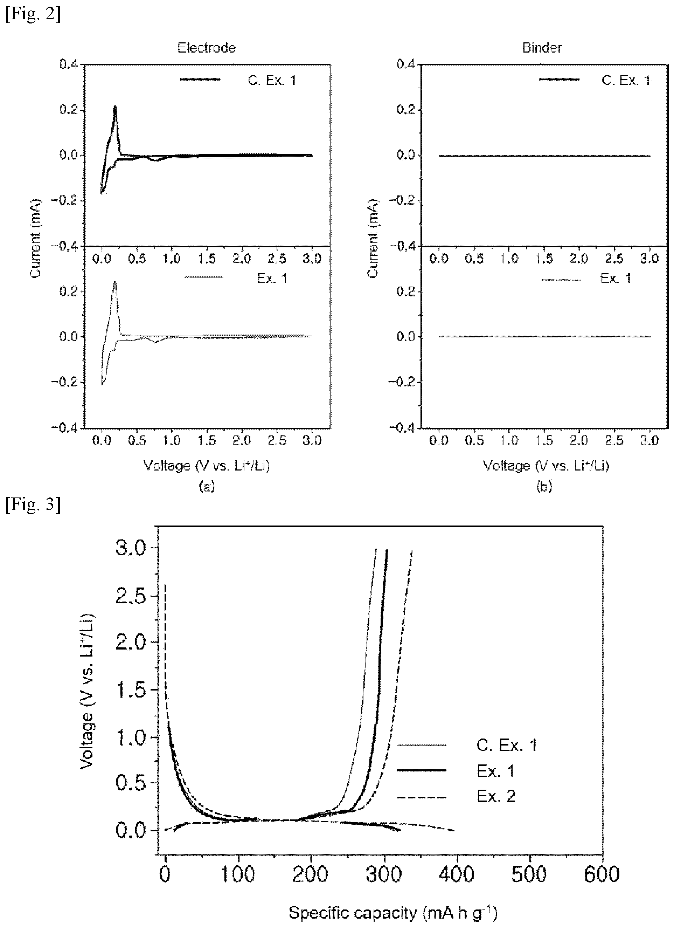

Oxidation resistance was evaluated under half-cell conditions using cyclic voltammetry (WBCS3000, Wonatech, Korea). The results are shown in Fig. 2.

Specifically, Fig. 2(a) shows the voltage-current curves of the electrodes of Comparative Example 1 and Example 1. Fig. 2(b) shows the voltage-current curves for the poly(vinylidene fluoride) (PVdF) binder used in Comparative Example 1 and the PHA (3-HB-co-4-HB, aPHA) binder used in Example 1.

As can be seen from Fig. 2, in the electrode of Example 1 using an aPHA as a binder, the oxidation resistance was excellent and electrochemically stable at a level similar to that of the electrode of Comparative Example 1 using a PVdF as a binder.

**Evaluation Example 3: Evaluation of electrochemical properties**

The electrochemical characteristics of the secondary batteries of Examples 1 and 2 and Comparative Example 1 were each evaluated.

(1) Specific capacity

The secondary batteries manufactured in the Examples and Comparative Example were each charged at a constant current of 0.05 C until the voltage reached 3 V and then discharged at a constant current of 0.05 C until the voltage reached 0.01 V, and the specific capacity for galvanostatic charge and discharge was measured.

(2) Coulombic efficiency

The secondary batteries manufactured in the Examples and Comparative Example were each charged at a constant current of 0.05 C until the voltage reached 3 V and then discharged at a constant current of 0.05 C until the voltage reached 0.01 V, and the Coulombic efficiency represented by the following Equation 1 was calculated.

[Equation 1]

$$\text{Coulombic efficiency (\%)} = \text{discharge capacity/charge capacity} \times 100$$

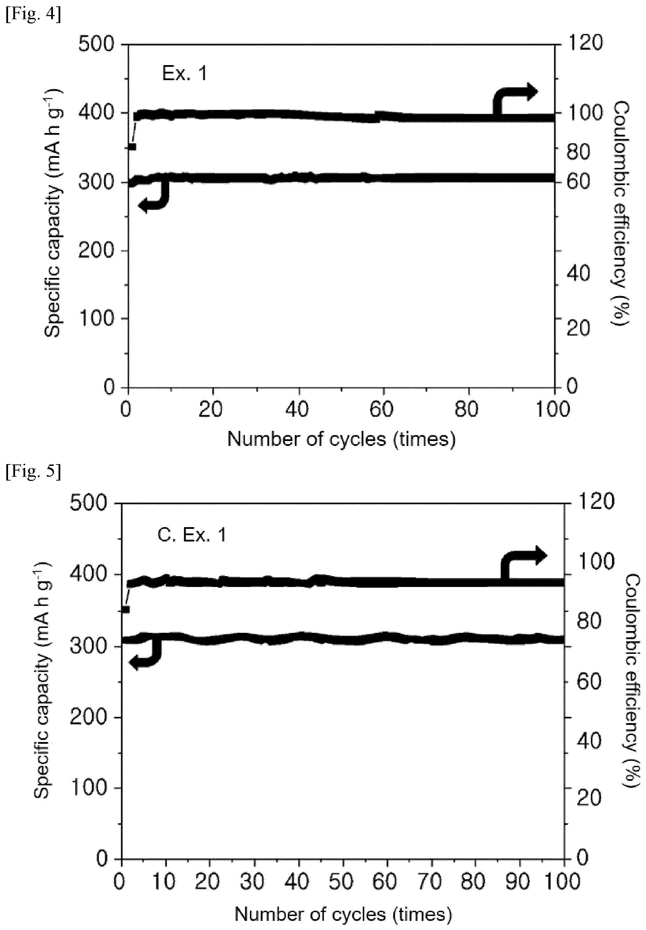

Figs. 3 to 5 are graphs showing the results of measuring the specific capacity and Coulombic efficiency of the secondary batteries of Example 1, Example 2, and Comparative Example 1. The results are summarized in Table 1 below.

[Table 1]

| | Type of binder | Negative electrode active material: binder: conductive material (weight ratio) | Specific capacity (mAhg$^{-1}$) | Coulombic efficiency (%) |
|---|---|---|---|---|
| Ex. 1 | aPHA | 8:1:1 | 299 | 94.4 |
| Ex. 2 | aPHA | 8.5:0.5:1 | 338 | 94.1 |
| C. Ex. 1 | PVdF | 8:1:1 | 277 | 93.7 |

As shown in Figs. 3 to 5 and Table 1, in the secondary batteries of Examples 1 and 2 using an aPHA as a binder, both the specific capacity and the Coulombic efficiency were enhanced as compared with the secondary battery of Comparative Example 1 using a PVdF as a binder.

In addition, when the specific capacity and Coulombic efficiency of the secondary batteries of Examples 1 and 2 with a controlled content of binder are compared, in the secondary battery of Example 2, in which the content of the binder was reduced to a weight ratio of the negative active material, binder, and conductive material of 8.5:0.5:1, the specific capacity was further enhanced, and the Coulombic efficiency was maintained at a similar level to that of the secondary battery of Example 1, in which the weight ratio of the negative active material, binder, and conductive material was 8:1:1, even though a smaller amount of binder was used.

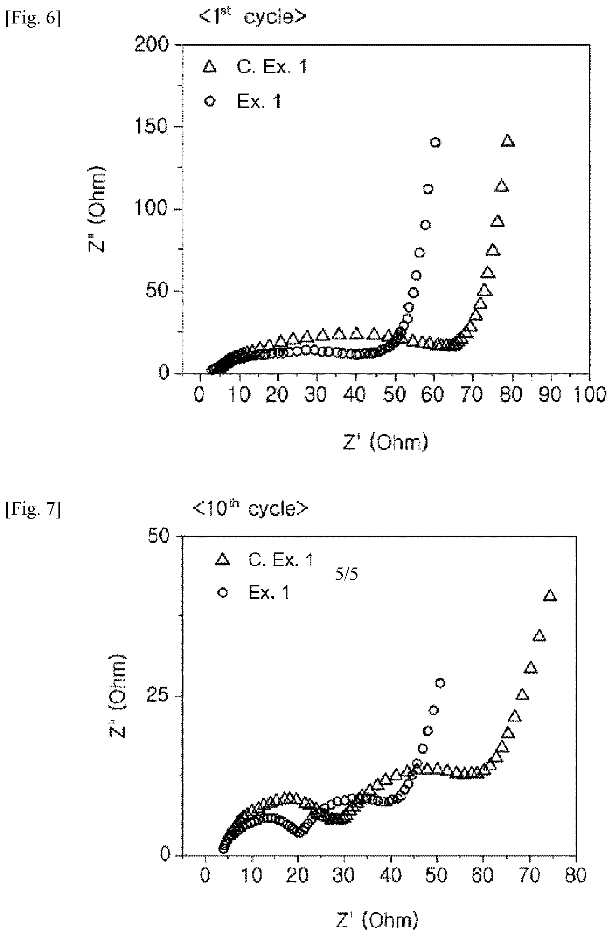

Meanwhile, Figs. 6 and 7 are graphs showing the results of measuring the impedance in the first cycle and the 10th cycle of the secondary batteries of Example 1 and Comparative Example 1.

The impedance was measured under the conditions of 0.01 V and 0.02 Ag$^{-1}$.

As can be seen from Figs. 6 and 7, in the secondary battery of Example 1 using an aPHA as a binder, the resistance was decreased by virtue of the excellent adhesive strength, even when the cycle was repeated, as compared with the secondary battery of Comparative Example 1 using a PVdF as a binder.

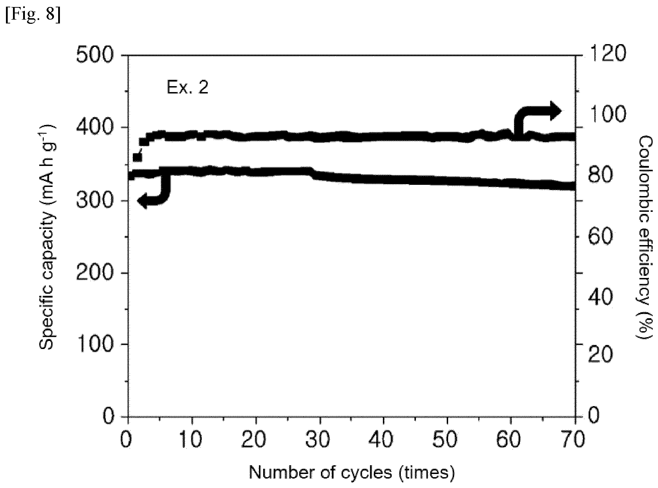

In addition, Fig. 8 is a graph showing the results of measuring the specific capacity and Coulombic efficiency according to the number of cycles (0 to 70) of the secondary battery of Example 2.

As can be seen from Fig. 8, in the secondary battery of Example 2, the specific capacity and Coulombic efficiency were not decreased even when the number of cycles was increased.

**Claims**

1. An electrode active material composition, which comprises an electrode active material, a binder, and a conductive material, wherein the binder comprises a polyhydroxyalkanoate (PHA).

2. The electrode active material composition according to claim 1, wherein the polyhydroxyalkanoate (PHA) has a glass transition temperature (Tg) of -45°C to 80°C and a melt index (MI) of 0.1 g/10 minutes to 500 g/10 minutes when measured at a temperature of 165°C under a load of 5.0 kg in accordance with ASTM D1238.

3. The electrode active material composition according to claim 1, wherein the polyhydroxyalkanoate (PHA) comprises at least one monomer selected from the group consisting of 4-hydroxybutyrate (4-HB), 3-hydroxybutyrate (3-HB), 3-hydroxypropionate (3-HP), 3-hydroxyvalerate (3-HV), 3-hydroxyhexanoate (3-HH), 4-hydroxyvalerate (4-HV), 5-hydroxyvalerate (5-HV), and 6-hydroxyhexanoate (6-HH).

4. The electrode active material composition according to claim 3, wherein the polyhydroxyalkanoate (PHA) comprises a PHA homopolymer composed of a 4-hydroxybutyrate (4-HB) monomer.

5. The electrode active material composition according to claim 3, wherein the polyhydroxyalkanoate (PHA) comprises a PHA copolymer comprising a 4-hydroxybutyrate (4-HB) monomer, wherein the 4-hydroxybutyrate (4-HB) monomer is employed in an amount of 1% by mole to 99% by mole based on the total moles of monomers employed in the PHA copolymer.

6. The electrode active material composition according to claim 1, wherein the binder is employed in an amount of 0.1% by weight to 20% by weight based on the total weight of the electrode active material composition.

7. The electrode active material composition according to claim 1, wherein the weight ratio of the electrode active material, the binder, and the conductive material is (4.0 to 9.8):(0.1 to 3.0):(0.1 to 3.0).

8. The electrode active material composition according to claim 1, wherein the electrode active material is a negative electrode active material.

9. The electrode active material composition according to claim 8, wherein the negative electrode active material comprises at least one selected from the group consisting of a carbon-based negative electrode active material, a silicon-based negative electrode active material, lithium metal, and a lithium alloy, and
the conductive material comprises at least one selected from the group consisting of graphite, carbon black, conductive fibers, conductive tubes, metal powders, conductive whiskers, and conductive metal oxides.

10. An electrode, which comprises an electrode active material, a binder, and a conductive material, wherein the binder comprises a polyhydroxyalkanoate (PHA).

11. A secondary battery, which comprises a negative electrode, a positive electrode, a separator interposed between the negative electrode and the positive electrode, and an electrolyte, wherein at least one of the negative electrode and the positive electrode comprises a binder comprising a polyhydroxyalkanoate (PHA).

12. The secondary battery according to claim 11, wherein when the secondary battery is charged at a constant current of 0.05 C until the voltage reaches 3 V and then discharged at a constant current of 0.05 C until the voltage reaches 0.01 V, the Coulombic efficiency represented by the following Equation 1 is 93% or more, and the specific capacity measured after repeat of the above charging and discharging twice is 280 mAhg$^{-1}$ or more:

[Equation 1]

Coulombic efficiency (%) = discharge capacity/charge capacity $\times$ 100.

[Fig. 1]

| At the beginning | After 1 day |

PVdF (powder)

aPHA (pellet)

[Fig. 2]

Voltage (V vs. Li⁺/Li)
(a)

Voltage (V vs. Li⁺/Li)
(b)

[Fig. 3]

Specific capacity (mA h g⁻¹)

[Fig. 4]

[Fig. 5]

[Fig. 6]

<1st cycle>

[Fig. 7]

<10th cycle>

[Fig. 8]

## INTERNATIONAL SEARCH REPORT

<table>
<tr><td colspan="2">International application No.<br><br>**PCT/KR2023/010433**</td></tr>
</table>

**A.    CLASSIFICATION OF SUBJECT MATTER**

**H01M 4/62**(2006.01)i; **H01M 4/133**(2010.01)i; **H01M 4/1393**(2010.01)i; **H01M 4/583**(2010.01)i; **H01M 10/0525**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/62(2006.01); C25B 9/23(2021.01); H01G 9/058(2006.01); H01M 4/86(2006.01); H01M 50/403(2021.01); H01M 8/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 바인더(binder), 이차전지(secondary-battery), 고분자(polymer), 폴리하이드록시알카노에이트(PHA), 활물질(active material), 4-하이드록시부티레이트(4-hydroxybutyrate), poly(3-hydroxybutyrate-co-4-hydroxybutyrate)

**C.    DOCUMENTS CONSIDERED TO BE RELEVANT**

| Category* | Citation of document, with indication, where appropriate, of the relevant passages | Relevant to claim No. |
|---|---|---|
| X | JP 2005-032633 A (TDK CORP.) 03 February 2005 (2005-02-03)<br>    See claims 1 and 2, and paragraphs [0028]-[0031], [0070], [0078] and [0079]. | 1-12 |
| A | JP 2020-009667 A (TOYO INK SC HOLDINGS CO., LTD.) 16 January 2020 (2020-01-16)<br>    See claims 1-5. | 1-12 |
| A | KR 10-2022-0060537 A (XEROX CORPORATION et al.) 11 May 2022 (2022-05-11)<br>    See paragraph [0025]. | 1-12 |
| A | JP 2015-038861 A (JSR CORP.) 26 February 2015 (2015-02-26)<br>    See paragraph [0033]. | 1-12 |
| A | VERSACI, D. et al. New eco-friendly low-cost binders for Li-ion anodes. Journal of Solid State Electrochemistry. 2017, vol. 21, pp. 3429-3435 (published online: 09 June 2017).<br>    See pages 3429-3435. | 1-12 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 October 2023** | **20 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2023/010433** |

### C. DOCUMENTS CONSIDERED TO BE RELEVANT

| Category* | Citation of document, with indication, where appropriate, of the relevant passages | Relevant to claim No. |
|---|---|---|
| PX | YOON, J. et al. Microbial-Copolyester-Based Eco-Friendly Binder for Lithium-Ion Battery Electrodes. ACS Applied Ploymer Materials. 2023, vol. 5, pp. 1199-1207 (publication date: 11 January 2023). See pages 1199-1207. | 1-12 |
| PX | NOWAK, A. P. et al. Poly(hydroxybutyrate-co-hydroxyvalerate) as a biodegradable binder in a negative electrode material for lithium-ion batteries. Applied Surface Science. 2022, vol. 606, thesis no. 154933, inner pp. 1-7 (published online: 17 September 2022). See inner pages 1-7. | 1-12 |

Form PCT/ISA/210 (second sheet) (July 2022)

**INTERNATIONAL SEARCH REPORT**
Information on patent family members

International application No.

**PCT/KR2023/010433**

| Patent document cited in search report | | | Publication date (day/month/year) | Patent family member(s) | | | Publication date (day/month/year) |
|---|---|---|---|---|---|---|---|
| JP | 2005-032633 | A | 03 February 2005 | JP | 4316951 | B2 | 19 August 2009 |
| JP | 2020-009667 | A | 16 January 2020 | JP | 7063156 | B2 | 09 May 2022 |
| KR | 10-2022-0060537 | A | 11 May 2022 | CA | 3151018 | A1 | 25 February 2021 |
| | | | | CA | 3190053 | A1 | 18 August 2023 |
| | | | | CN | 114730889 | A | 08 July 2022 |
| | | | | CN | 116632375 | A | 22 August 2023 |
| | | | | EP | 4018493 | A1 | 29 June 2022 |
| | | | | JP | 2022-545009 | A | 24 October 2022 |
| | | | | US | 2022-173433 | A1 | 02 June 2022 |
| | | | | US | 2022-344713 | A1 | 27 October 2022 |
| | | | | WO | 2021-034899 | A1 | 25 February 2021 |
| | | | | WO | 2021-034899 | A8 | 23 September 2021 |
| JP | 2015-038861 | A | 26 February 2015 | JP | 6269949 | B2 | 31 January 2018 |

Form PCT/ISA/210 (patent family annex) (July 2022)

**REFERENCES CITED IN THE DESCRIPTION**

**Patent documents cited in the description**

- KR 102071585